# EUROPEAN PATENT SPECIFICATION

(11) **EP 4 029 922 B1**
(45) Date of publication and mention of the grant of the patent: **17.06.2026**
(21) Application number: 20862280.3
(22) Date of filing: 07.09.2020
(51) Int. Cl.: C09K 5/10, B65D 75/28, B65D 75/04

(54) **ENVIRONMENTALLY FRIENDLY COLD INSULATION COMPOSITION AND COLD INSULATION PACK COMPRISING THE SAME**
UMWELTFREUNDLICHE KÄLTESCHUTZZUSAMMENSETZUNG UND DIESE ENTHALTENDE KÄLTESCHUTZPACKUNG
COMPOSITION D'ISOLATION CONTRE LE FROID RESPECTUEUSE DE L'ENVIRONNEMENT ET BLOC D'ISOLATION CONTRE LE FROID LA COMPRENANT

(30) Priority: 11.09.2019 KR 20190112858
(43) Date of publication of application: 20.07.2022
(73) Proprietor: OCI Company Ltd., Seoul 04532 (KR)
(72) Inventor: LEE, Sang Yup, Seongnam-si Gyeonggi-do 13212 (KR); PARK, Young Hun, Seongnam-si Gyeonggi-do 13212 (KR); KIM, Kyung Yeol, Seongnam-si Gyeonggi-do 13212 (KR); KIM, Yong Il, Seongnam-si Gyeonggi-do 13212 (KR)
(74) Representative: Kuhnen & Wacker Patent- und Rechtsanwaltsbüro PartG mbB
(86) International application number: PCT/KR2020/012043
(87) International publication number: WO 2021/049833

(56) References cited:
- WO-A1-2004/052251
- WO-A1-2018/016585
- WO-A1-97/47174
- JP-A- H0 617 037
- JP-A- H1 095 970
- LI TANG, CHENG JIANJUN: "Nonporous silica nanoparticles for nanomedicine application", NANO TODAY , vol. 8, no. 3, 5 June 2013 (2013-06-05), NL, pages 290 - 312, XP055456862, ISSN: 1748-0132, DOI: 10.1016/j.nantod.2013.04.007
- ANDONG UNIVERSITY INDUSTRY-ACADEMIC COOPERATION FOUNDATION: "Development of eco-friendly ultra-saving glass fiber insulation", 1 June 2012 (2012-06-01), pages 1 - 38, XP009526634, Retrieved from the Internet <URL:https://scienceon.kisti.re.kr/srch/selectPORSrchReport.do?cn=TRKO201200008986&dbt=TRKO>

## Description

### TECHNICAL FIELD

The present invention disclosed herein relates to a cold insulation composition and a cold insulation pack including the same, and more particularly, to a cold insulation composition having eco-friendliness and at the same time, maintaining cold insulation performance for a long time, and a cold insulation pack including the same.

### BACKGROUND ART

Cold insulators play the role of maintaining a low temperature state of foods, medicines, or the like, contained in a closed container for a certain time. As the main components of cold insulation compositions, super absorbent polymers (SAP) are used.

Super absorbent polymers may absorb 40 to 1,000 times water of the weight of a resin itself through the expansion of its volume, and if freezes, chilly air may be provided for a long time, and have been used as the main component of a cold insulation composition. However, recently, environmental regulations on cold insulation compositions are being tightened, and the release of the super absorbent polymers which are classified into microplastics is limited.

As an alternative, the application of edible powders such as starch or flour as the main component of the cold insulation compositions has been tried, but there were problems in that the cold insulation compositions could not be utilized for a long time due to bacterial growth problems. In addition, since the edible powders have a small volume density, there were also problems of deteriorating the stability of cold insulation compositions.

Accordingly, recently, research on cold insulation compositions which may secure eco-friendliness (harmless to human body, excluding organic materials, low suspended solid) and at the same time, maintain high cold insulation performance is being continued.
The published patent application WO 97/47174 A1 discloses a thermal energy storage composition according to the prior art. The composition which is in the form of a gel includes a phase change material and silica particles, where the phase change material may comprise a linear alkyl hydrocarbon, water/urea, or water.

### DISCLOSURE OF THE INVENTION

### TECHNICAL PROBLEM

The task for solving in the present invention is to provide a cold insulation composition which may have eco-friendliness and at the same time, maintain cold insulation performance for a long time.

Another task for solving in the present invention is to provide a cold insulation pack including the cold insulation composition.

### TECHNICAL SOLUTION

Fumed silica used as the cold insulation composition in the present invention is a typical amorphous powder with a purity of (>99.8%), and is applied diversely in fields in which people may consume or come into contact with, such as food additives, medicines, toothpastes, cookware, or the like. In addition, a lot of research materials have been reported that, because the fumed silica is an inorganic material, there are no corruption issues, and if released, it is harmless to marine life. Particularly, the fumed silica has a unique structure capable of forming a three-dimensional network in various mixture system, and there are advantages in that excellent cold insulation performance may be expected with a small amount, and it could be released easily.

A cold insulation composition according to the concept of the present invention comprises: fumed silica; a basic compound; a thickener; and a balance of water, wherein the fumed silica may be nonporous.

A cold insulation pack according to another concept of the present invention may comprise the cold insulation composition and a packaging material sealing the cold insulation composition.

### ADVANTAGEOUS EFFECTS

The cold insulation composition according to an embodiment of the present invention may have eco-friendliness and at the same time, maintain cold insulation performance for a long time. In addition, a stable dispersion state may be maintained in an aqueous solution, and long-term storage may be secured.

However, the effects of the present invention are not limited thereto.

### BRIEF DESCRIPTION OF THE DRAWING

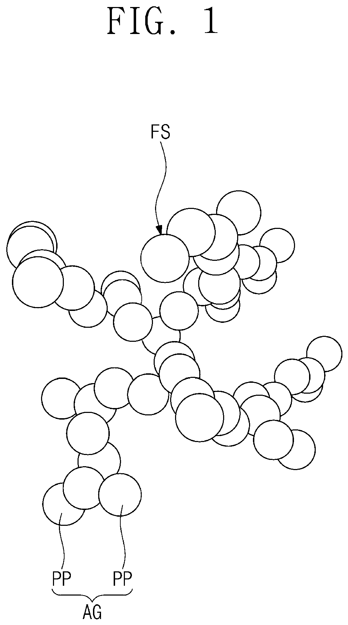

FIG. 1 is an enlarged diagram showing the structure of fumed silica according to embodiments of the present invention.

### MODE FOR CARRYING OUT THE INVENTION

Preferred embodiments of the present invention will be explained below to sufficiently understand the configuration and effects of the present invention. The present invention should not be constructed as limited to the embodiments set forth herein. Rather, these embodiments are provided so that this disclosure will be thorough and complete through the explanation and will fully convey the scope of the present invention to those skilled in the art.

The terms used in the disclosure are used for explaining example embodiments, but the present invention should not be limited by these terms. In the present disclosure, the singular forms are intended to include the plural forms as well, unless the context indicates otherwise. The terms "comprises" and/or "comprising," used in this disclosure, specify the presence of stated elements, but do not preclude the presence or addition of one or more other elements.

The cold insulation composition according to the present invention includes fumed silica.

FIG. 1 is an enlarged diagram showing the structure of fumed silica FS according to embodiments of the present invention.

Fumed silica FS may include amorphous silicon dioxide (SiO₂). The fumed silica FS may show a white powder shape when alone. The fumed silica FS may be hydrophilic. The average diameter of the primary particles PP composing the fumed silica FS may be 5 to 50 nm. The specific surface area of the fumed silica FS may be 40 to 500 m²/g.

Fumed silica FS may be formed by the hydrolysis of chlorosilane in the flame of 1,000°C or higher, formed by oxygen and hydrogen. The fumed silica FS may form an aggregate AG through the collision and connection among the primary particles PP produced in the flame, as shown in FIG. 1. In other words, the aggregate AG may include multiple primary particles PP. The aggregate AG may have a three-dimensional branch structure. The size of the aggregate AG may be 1 to 500 µm.

The fumed silica FS may be nonporous. In the case of nonporous fumed silica, the size of the average diameter of the primary particles PP may be smaller than the porous fumed silica. Accordingly, if the cold insulation composition includes the nonporous fumed silica, even higher density and viscosity may be secured.

Fumed silica FS may have hydrophilicity. Accordingly, the fumed silica FS may have miscibility with other compounds in an aqueous solution. For example, in the three-dimensional branch structure of the fumed silica FS, an aqueous solution may be confined, and the aggregate AG of the fumed silica FS may be a carrier.

The weight ratio of the fumed silica FS is not specifically limited, but may be, for example, 1 to 20 wt% based on the total weight of the cold insulation composition. If the weight ratio of the fumed silica FS is less than 1 wt%, a sufficient viscosity may not be secured, and the stability of the cold insulation composition may be degraded. If the weight ratio of the fumed silica is greater than 20 wt%, the fumed silica may not be mixed uniformly in the cold insulation composition, and the specific heat of the cold insulator may be reduced to induce the degradation of cold insulation performance.

The cold insulation composition according to the present invention includes a basic compound.

The basic compound plays the role of controlling the pH of the cold insulation composition. As the type of the basic compound, any one that may be dissolved in an aqueous solution to increase the pH of the aqueous solution may be used without specific limitation. For example, one or more selected from alkali metal hydroxides, alkaline earth metal hydroxides, carbonates, and bicarbonates may be used.

The weight ratio of the basic compound is not specifically limited, but may be, for example, 0.01 to 0.05 wt% based on the total weight of the cold insulation composition. If the weight ratio of the basic compound satisfies the above-described range, the pH of the cold insulation composition may be effectively controlled.

The basic compound may stabilize the phase of an aqueous solution including the fumed silica FS (that is, the cold insulation composition). If an aqueous solution is formed by mixing only fumed silica FS and water, the pH of the aqueous solution may be reduced to 3 or less, and the phase of the aqueous solution may become unstable. If the basic compound is added to the aqueous solution, and the pH is increased, the cold insulation composition may be stabilized, and through neutralization, safety issue about skin exposure may be resolved, and the disposal of waste water may be easily conducted. The cold insulation composition according to the present invention includes a thickener.

The thickener plays the role of combining the constituent components in the cold insulation composition, promoting gelation and improving the process efficiency in manufacturing. As the thickener, any one that is an inorganic material may be used without specific limitation, and preferably, alkali metal salts or alkaline earth metal salts may be used. For example, the thickener may include sodium chloride (NaCl).

The weight ratio of the thickener is not specifically limited but may be, for example, 0.1 to 5 wt% based on the total weight of the cold insulation composition. If the weight ratio of the thickener is less than 0.1 wt%, the combining force and gelation degree among constituent components may be insufficient. If the weight ratio of the thickener is greater than 5 wt%, the viscosity of the cold insulation composition may increase to more than necessary, and workability may be deteriorated.

The cold insulation composition according to the present invention includes water.

Water plays the role of a solvent dispersing the fumed silica, the basic compound and the thickener uniformly. For example, the water may use deionized water, pure water, ultrapure water, distilled water, or the like.

The weight ratio of the water is not specifically limited but may be, for example, a balance satisfying the 100 wt% of the cold insulation composition.

The pH of the cold insulation composition according to embodiments of the present invention is not specifically limited but may be, for example, 5.5 to 8.5.

The viscosity of the cold insulation composition according to embodiments of the present invention is not specifically limited but may be, for example, 0.001 Pa•s to 50 Pa•s, (1 cPs to 50000 cPs). more particularly, 0.2 Pa•s to 5 Pa•s. (200 cPs to 5000 cPs).

The total organic carbon (TOC) of the cold insulation composition according to embodiments of the present invention is not specifically limited but may be, for example, 0 ppm to 1 ppm.

The cold insulation composition according to embodiments of the present invention uses fumed silica as a main component and has advantages of securing eco-friendliness. Accordingly, reinforcing environmental standards on pH, TOC, and the amount of suspended solids (SS) may be satisfied.

In addition, different from a cold insulation composition including a super absorbent polymer as a main component, the cold insulation composition according to embodiments of the present invention maintains a stable dispersion state in an aqueous solution, arises no problems on bacterial growth and secures long-term storage.

According to another embodiment of the present invention, a cold insulation pack including a cold insulation composition may be provided. Particular explanation on the cold insulation composition included in the cold insulation pack may be substantially the same as the explanation provided above.

The cold insulation pack may include a packaging material sealing the cold insulation composition. The packaging material may be a thin film and may include, for example, at least one selected from the group consisting of polyethylene (PE), linear low-density polyethylene (LLDPE), polypropylene (PP), polyvinyl chloride (PVC), polyethylene terephthalate (PET), and biodegradable polymer resins (for example, polylactic acid (PLA), polybutylene succinate (PBS) or polybutylene adipate phthalate (PBAT)).

### <Example 1 and Comparative Examples 1-2>

### Example 1

Fumed silica, sodium hydroxide (NaOH) and sodium chloride (NaCl) were injected into distilled water and stirred to prepare a cold insulation composition (pH 7) according to Example 1. The content of the fumed silica of the cold insulation composition of Example 1 was 10 wt%, and the content of sodium chloride (NaCl) was 0.5 wt%. The sodium hydroxide (NaOH) was added until the pH of the cold insulation composition reached 7.

### Comparative Example 1

A commercially available super absorbent polymer (SAP) cold insulator was purchased and used.

### Comparative Example 2

A cold insulation composition of Example 2 was prepared by omitting sodium chloride (NaCl) from the cold insulation composition of Example 1.

### <Experimental Example>

### 1. Evaluation of cold insulation properties

1 kg of each of the cold insulation compositions according to Example 1 and Comparative Examples 1-2 was taken and cooled at -10°C for 10 hours. The cooled cold insulation compositions were stood at room temperature, and the time until reaching to 5°C was measured. The results are shown in Table 1 below.

**[Table 1]**

| | Example 1 | Comparative Example 1 | Comparative Example 2 |
|---|---|---|---|
| Hour (hr) | 16.33 | 16.25 | 16.27 |

As shown in Table 1 above, it could be confirmed that the cold insulation composition according to Example 1 could secure equal or better level of cold insulation properties when compared to the conventional commercially available SAP cold insulator (Comparative Example 1). Since the cold insulation composition according to Example 1 did not include a separate organic compound, the TOC of less than 1 ppm was measured. In addition, it could be confirmed that a stable dispersion state was maintained at room temperature, and long-term storage could be secured.

## Claims

1. A cold insulation composition, comprising:
fumed silica;
a basic compound;
a thickener; and
a balance of water, wherein
the fumed silica is nonporous silica.

2. The cold insulation composition of claim 1, wherein
the fumed silica has a primary particle average diameter of 5 to 50 nm, and a specific surface area of 40 to 500 m²/g.

3. The cold insulation composition of claim 1, wherein the basic compound comprises one or more selected from alkali metal hydroxides, alkaline earth metal hydroxides, carbonates and bicarbonates.

4. The cold insulation composition of claim 1, wherein the thickener comprises an inorganic material.

5. The cold insulation composition of claim 1, wherein the thickener comprises alkali metal salts or alkaline earth metal salts.

6. The cold insulation composition of claim 1, wherein the thickener comprises sodium chloride (NaCl).

7. The cold insulation composition of claim 1, wherein, based on a total weight of the cold insulation composition,
the content of the fumed silica is 1 to 20 wt%,
the content of the basic compound is 0.01 to 0.05 wt%, and
the content of the thickener is 0.1 to 5 wt%.

8. The cold insulation composition of claim 1, wherein a pH of the cold insulation composition is 5.5 to 8.5.

9. The cold insulation composition of claim 1, wherein a viscosity of the cold insulation composition is 0.001 Pa•s to 50 Pa•s (1 cPs to 50000 cPs)

10. The cold insulation composition of claim 1, wherein a total organic carbon (TOC) of the cold insulation composition is 0 ppm to 1 ppm.

11. A cold insulation pack, comprising:
a cold insulation composition; and
a packaging material sealing the cold insulation composition, wherein
the cold insulation composition comprises:
fumed silica;
a basic compound;
a thickener; and
a balance of water, wherein
the fumed silica is nonporous silica.

12. The cold insulation pack of claim 11, wherein the packaging material comprises at least one selected from the group consisting of polyethylene (PE), linear low-densitypolyethylene (LLDPE), polypropylene (PP), polyvinyl chloride (PVC), polyethylene terephthalate (PET), polylactic acid (PLA), polybutylene succinate (PBS) and polybutylene adipate phthalate (PBAT).

## Patentansprüche

1. Kälteisolierungszusammensetzung, umfassend:
pyrogene Kieselsäure;
eine basische Verbindung;
ein Verdickungsmittel; und
den Rest Wasser, wobei
die pyrogene Kieselsäure nichtporöse Kieselsäure ist.

2. Kälteisolierungszusammensetzung nach Anspruch 1, wobei
die pyrogene Kieselsäure einen Mittelwert des Durchmessers der Primärpartikel von 5 bis 50 nm und eine spezifische Oberfläche von 40 bis 500 m²/g aufweist.

3. Kälteisolierungszusammensetzung nach Anspruch 1, wobei die basische Verbindung eine oder mehrere Verbindungen umfasst, die aus Alkalimetallhydroxiden, Erdalkalimetallhydroxiden, Carbonaten und Bicarbonaten ausgewählt sind.

4. Kälteisolierungszusammensetzung nach Anspruch 1, wobei das Verdickungsmittel ein anorganisches Material umfasst.

5. Kälteisolierungszusammensetzung nach Anspruch 1, wobei das Verdickungsmittel Alkalimetallsalze oder Erdalkalimetallsalze umfasst.

6. Kälteisolierungszusammensetzung nach Anspruch 1, wobei das Verdickungsmittel Natriumchlorid (NaCl) umfasst.

7. Kälteisolierungszusammensetzung nach Anspruch 1, wobei, bezogen auf das Gesamtgewicht der Kälteisolierungszusammensetzung,
der Gehalt an der pyrogenen Kieselsäure 1 bis 20 Gew.-% beträgt,
der Gehalt an der basischen Verbindung 0,01 bis 0,05 Gew.-% beträgt und
der Gehalt an dem Verdickungsmittel 0,1 bis 5 Gew.-% beträgt.

8. Kälteisolierungszusammensetzung nach Anspruch 1, wobei der pH-Wert der Kälteisolierungszusammensetzung 5,5 bis 8,5 beträgt.

9. Kälteisolierungszusammensetzung nach Anspruch 1, wobei die Viskosität der Kälteisolierungszusammensetzung 0,001 Pa·s bis 50 Pa·s (1 cPS bis 50000 cPs) beträgt.

10. Kälteisolierungszusammensetzung nach Anspruch 1, wobei der Gesamtgehalt an organischem Kohlenstoff (TOC) der Kälteisolierungszusammensetzung 0 ppm bis 1 ppm beträgt.

11. Kälteisolierungspack, umfassend:
eine Kälteisolierungszusammensetzung; und
ein Verpackungsmaterial, das die Kälteisolierungszusammensetzung versiegelt, wobei die Kälteisolierungszusammensetzung umfasst:
pyrogene Kieselsäure;
eine basische Verbindung;
ein Verdickungsmittel; und
den Rest Wasser, wobei
die pyrogene Kieselsäure nichtporöse Kieselsäure ist.

12. Kälteisolierungspack nach Anspruch 11, wobei das Material mindestens eine Substanz umfasst, die aus der Gruppe ausgewählt ist, bestehend aus Polyethylen (PE), linearem Polyethylen niedriger Dichte (LLDPE), Polypropylen (PP), Polyvinylchlorid (PVC), Polyethylenterephthalat (PET), Polymilchsäure (PLA), Polybutylensuccinat (PBS) und Polybutylenadipatphthalat (PBAT).

## Revendications

1. Une composition d'isolation thermique, comprenant :
de la silice pyrogénée ;
un composé basique ;
un agent épaississant ; et
le reste étant de l'eau, dans laquelle
la silice pyrogénée est de la silice non poreuse.

2. La composition d'isolation thermique selon la revendication 1, dans laquelle
la silice pyrogénée présente un diamètre moyen des particules primaires de 5 à 50 nm, et une surface spécifique de 40 à 500 m²/g.

3. La composition d'isolation thermique selon la revendication 1, dans laquelle le composé basique comprend un ou plusieurs composés choisis parmi les hydroxydes de métaux alcalins, les hydroxydes de métaux alcalino-terreux, les carbonates et les bicarbonates.

4. La composition d'isolation thermique selon la revendication 1, dans laquelle l'agent épaississant comprend un matériau inorganique.

5. La composition d'isolation thermique selon la revendication 1, dans laquelle l'agent épaississant comprend des sels de métaux alcalins ou des sels de métaux alcalino-terreux.

6. La composition d'isolation thermique selon la revendication 1, dans laquelle l'agent épaississant comprend du chlorure de sodium (NaCl).

7. La composition d'isolation thermique selon la revendication 1, dans laquelle, par rapport au poids total de la composition d'isolation thermique,
la teneur en silice pyrogénée est de 1 à 20 % en poids,
la teneur en composé basique est de 0,01 à 0,05 % en poids, et
la teneur en l'agent épaississant est de 0,1 à 5 % en poids.

8. La composition d'isolation thermique selon la revendication 1, dans laquelle le pH de la composition d'isolation thermique est de 5,5 à 8,5.

9. La composition d'isolation thermique selon la revendication 1, dans laquelle la viscosité de la composition d'isolation thermique est de 0,001 Pa·s à 50 Pa·s (1 cPs à 50 000 cPs).

10. La composition d'isolation thermique selon la revendication 1, dans laquelle la teneur en carbone organique total (TOC) de la composition d'isolation thermique est de 0 ppm à 1 ppm.

11. Une poche d'isolation thermique, comprenant :
une composition d'isolation thermique ; et
un matériau d'emballage scellant la composition d'isolation thermique, dans laquelle
la composition d'isolation thermique comprend :
de la silice pyrogénée ;
un composé basique ;
un agent épaississant ; et
le reste étant constitué d'eau, dans laquelle
la silice pyrogénée est une silice non poreuse.

12. La poche d'isolation thermique selon la revendication 11, dans laquelle le matériau d'emballage comprend au moins un élément choisi parmi le groupe constitué du polyéthylène (PE), du polyéthylène linéaire à basse densité (LLDPE), du polypropylène (PP), le chlorure de polyvinyle (PVC), le polyéthylène téréphtalate (PET), l'acide polylactique (PLA), le polybutylène succinate (PBS) et le polybutylène adipate phtalate (PBAT).
